(19) **Europäisches Patentamt**

**European Patent Office**

**Office européen des brevets**

(11) Publication number: **0 034 246**
**B1**

(12) **EUROPEAN PATENT SPECIFICATION**

(45) Date of publication of patent specification: **19.03.86**

(51) Int. Cl.⁴: **B 05 B 5/04**

(21) Application number: **81100100.7**

(22) Date of filing: **08.01.81**

(54) **A rotary type electrostatic spray painting device.**

(30) Priority: **19.02.80 JP 18450/80**
**23.05.80 JP 67914/80**

(43) Date of publication of application:
**26.08.81 Bulletin 81/34**

(45) Publication of the grant of the patent:
**19.03.86 Bulletin 86/12**

(84) Designated Contracting States:
**CH DE FR GB LI**

(56) References cited:
**EP-A-0 034 254**
**EP-A-0 034 280**
**BE-A- 654 767**
**DE-C- 973 478**
**FR-A-2 336 181**
**FR-A-2 356 835**
**FR-A-2 412 351**
**GB-A-1 072 684**
**US-A-2 449 138**
**US-A-3 497 273**
**US-A-3 957 317**
**US-A-3 985 405**
**US-A-4 148 932**

(73) Proprietor: **TOYOTA JIDOSHA KABUSHIKI KAISHA**
**1, Toyota-cho Toyota-shi**
**Aichi-ken 471 (JP)**

(72) Inventor: **Morishita, Teru**
**187-1, Nagasawa Shimizu-cho**
**Sunto-gun Shizuoka-ken (JP)**
Inventor: **Sugiyama, Matuyoshi**
**1321, Mishuku**
**Susono-shi Shizuoka-ken (JP)**
Inventor: **Suzuki, Toshikazu**
**1-1, Hirayama-cho, 3-chome**
**Toyota-shi Aichi-ken (JP)**

(74) Representative: **Tiedtke, Harro, Dipl.-Ing. et al**
**Patentanwaltsbüro Tiedtke-Bühling-Kinne-Grupe-Pellmann-Grams-Struif Bavariaring 4**
**Postfach 20 24 03**
**D-8000 München 2 (DE)**

Courier Press, Leamington Spa, England.

## Description

Description of the Invention

The present invention relates to a rotary type electrostatic spray painting device according to the preamble of the claim 1.

An electrostatic spray painting device of this kind is known (from FR—A—2 336 181) and is used for painting, for example, bodies of motor cars. This electrostatic spray painting device comprises a rotary shaft supported by ball bearings or roller bearings within the housing of the painting device, and a cup-shaped spray head fixed onto the front end of the rotary shaft. In this painting device, a negative high voltage is applied to the spray head, and paint is fed onto the inner circumferential wall of the spray head. Thus, fine paint particles charged with electrons are sprayed from the spray head and are attracted by the electrical force onto the surface of the body of a motor car, which is grounded. As a result of this, the surface of the body of the motor car is painted. In such a rotary type electrostatic spray painting device, since the paint, the amount of which is about 90 percent relative to the amount of the paint sprayed from the spray head, can be efficiently used for painting the surface to be painted, the consumption of the paint is small and, as a result, a rotary type electrostatic spray painting device is used in various industries.

In order to form a beautiful finished surface when a surface is painted by using a spray paint, it is necessary to reduce the size of the particles of paint as much as possible. In the case wherein the paint is divided into fine particles by using the centrifugal force caused by the rotation of the spray head, as in a rotary type spray painting device, the strength of the centrifugal force, that is, the rotating speed of the spray head has a great influence on the size of the particles of paint. In other words, the higher the rotating speed of the spray head becomes, the smaller the size of the particles of paint becomes. Consequently, in order to form a beautiful finished surface by using a rotary type electrostatic spray painting device, it is necessary to increase the rotating speed of the spray head as much as possible. As mentioned above, in the conventional rotary type electrostatic spray painting device, ball bearings or roller bearings are used for supporting the rotary shaft of the electrostatic spray painting device and, in addition, a lubricant, such as grease, is confined within the ball bearings or the roller bearings. To prevent paint particles from entering into the housing and into the ball bearings, the bearing chamber is supplied with compressed air that flows out through said air outlet.

An annular member supporting an injector is provided between the cover plate of the housing and the spray head. Furthermore, the annular air outlets formed on the cover plate around the shaft extends in an inclined manner to the outside so that the compressed air flowing through this outlet directly hits upon the annular member supporting the injector and is then prevented from entering into the annular space formed in the rear face of the spray head.

When the spray head is rotated at a high speed, ambient air containing paint particles therein flows along the front face of the annular member towards the annular space of the spray head. As a result, the paint particles adhere to the front face of the annular member.

In addition, when washing out the paint particles adhering to the front face of the annular member, it is necessary to remove the spray head. Consequently, it is impossible to easily wash out the paint particles.

An object of the present invention is to provide a rotary type electrostatic spray painting device in which adhesion of paint particles to the face delimiting the annular space is largely prevented and which can easily be cleaned.

The above mentioned FR—A—2 336 181 discloses a rotary type electrostatic spray painting device comprising:

a metallic housing with a driven metallic rotary shaft rotatably arranged therein and having a rear end and a front end projecting through a cover plate of the housing and carrying a cup-shaped metallic spray head fixed thereto, and

feeding means for feeding a paint onto a cup-shaped inner wall of the spray head, wherein the rotary shaft is guided within the housing by an axially and radially supporting bearing means, wherein a bearing chamber supplied with compressed air is defined as surrounding the rotary shaft, the bearing chamber being in communication with an annular air outlet formed on the cover plate around the shaft, and wherein an annular space is formed in the rear face of the spray head.

The present invention is characterised in that the bearing means are designed as aerostatic radial bearing means and non-contact type thrust bearing means, wherein the compressed air is fed to the bearing chamber through the radial bearing means, and in that a free space is provided adjacent said rotary shaft between said cover plate and said spray head, said annular space of said spray head and said annular air outlet being open to said free space.

From DE—C—973 478, it is known to provide compressed air flowing out of a bearing means. However, contrary to the invention, this compressed air does not contribute to reduce the level of vacuum in the annular space of the spray head.

The present invention may be more fully understood from the description of preferred embodiments of the invention set forth below, together with the accompanying drawings.

Brief Description of the Drawings

In the drawings:

Fig. 1 is a cross-sectional side view of an embodiment of a rotary type elctrostatic spray painting device according to the present invention;

Fig. 2 is a cross-sectional view taken along the line II—II in Fig. 1;

Fig. 3 is a cross-sectional view taken along the line IV—IV in Fig. 1;

Fig. 4 is a cross-sectional side view of another embodiment of a rotary type electrostatic spray painting device according to the present invention;

Fig. 5 is a cross-sectional side view of a further embodiment of a radial air bearing according to the present invention;

Fig. 6 is a cross-sectional side view of a still further embodiment of a thrust air bearing according to the present invention;

Fig. 7 is a front view of the annular plate illustrated in Fig. 6;

Fig. 8 is an enlarged cross-sectional side view of the annular plate, illustrating the inside enclosed by the circle C in Fig. 6;

Fig. 9 is a graph showing the relationship between the size of paint particles and the rotating speed of the spray head.

Description of Preferred Embodiments

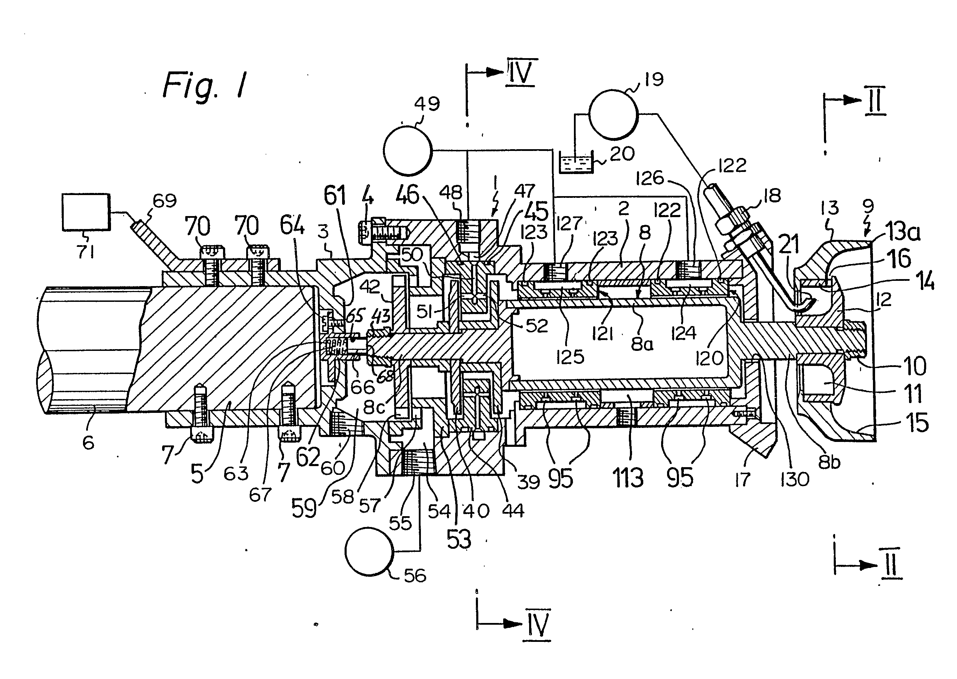

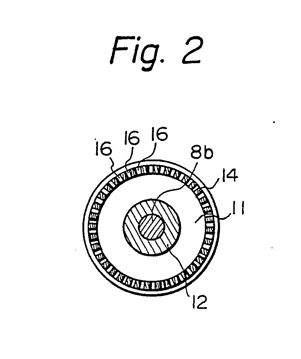

Referring to Fig. 1, a rotary type electrostatic spray painting device, generally designated by reference numeral 1, comprises a generally hollow cylindrical front housing 2 made of metallic material, and a generally hollow cylindrical rear housing 3 made of metallic material. The front housing 2 and the rear housing 3 are firmly joined to each other by bolts 4. A support rod 6, made of electrically insulating material, is fitted into a cylindrical hole 5 formed in the rear housing 3, and this rear housing 3 is fixed onto the support rod 6 by bolts 7. The support rod 6 is supported by a base (not shown). A rotary shaft 8 is inserted into the front housing 2. This rotary shaft 8 comprises a hollow cylindrical portion 8a located in the middle thereof, a shaft portion 8b formed in one piece on the front end of the hollow cylindrical portion 8a, and a shaft portion 8c is fixed onto the rear end of the hollow cylindrical portion 8a. A spray head 9 made of metallic material is fixed onto the shaft portion 8b of the rotary shaft 8 by a nut 10. The spray head 9 comprises a spray head supporting member 12 forming therein an annular space 11, and a cup-shaped spray head body 13 fixed onto the spray head supporting member 12. As illustrated in Figs. 1 and 2, a plurality of paint outflow bores 16, each opening into the annular space 11 and smoothly connected to an inner wall 15 of the spray head body 13, is formed in an outer cylindrical portion 14 of the spray head supporting member 12.

As illustrated in Fig. 1, a cover plate 17 is fixed onto the front end of the front housing 2 and a paint injector 18 is mounted on the end or cover plate 17. The paint injector 18 is connected to a paint reservoir 20 via a paint feed pump 19, and a nozzle 21 of the paint injector 18 is directed to the cylindrical inner wall of the outer cylindrical portion 14 of the spray head supporting member 12.

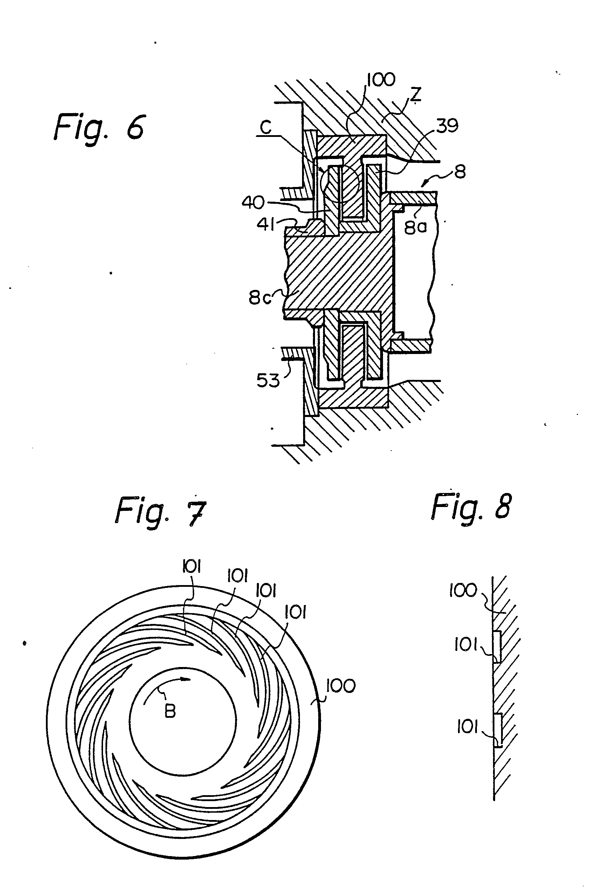

A pair of static pressure radial air bearings 120, 121, each having a construction which is illustrated in Fig. 5 in greater detail, is provided for supporting the rotary shaft 8. The static pressure radial air bearing 120 is fixed onto the front housing 2 via a pair of O rings 122, and the static pressure radial air bearing 121 is fixed onto the front housing 2 via a pair of O rings 123. Air supply chambers 124 and 125 are formed in the static pressure radial air bearings 120 and 121, respectively, and connected to the air feed pump 49 via corresponding air inlets 126 and 127. A plurality of air outflow bores 95 connected to the air supply chamber 124 is formed on the inner circumferential bearing face of the static pressure radial air bearing 120, and a plurality of air outflow bores 95 connected to the air supply chamber 125 is formed on the inner circumferential bearing wall of the static pressure radial air bearing 121. The rotatary shaft 8 is supported under a non-contacting state by the air injected from the air outflow bores 128, 129.

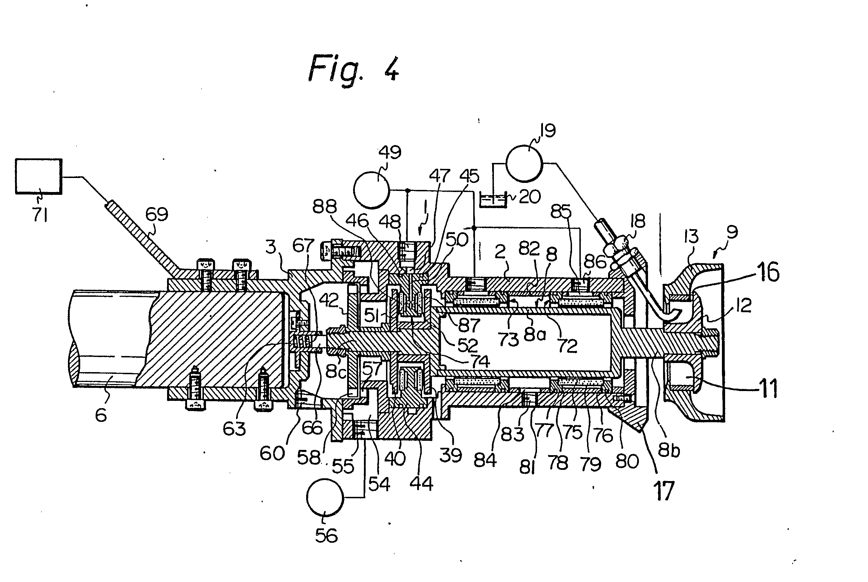

Referring to Fig. 5, the static pressure radial air bearings 120, 121 each comprise a bearing ring 92 fitted into the front housing 2 via a pair of the O rings 122, 123 which seal between the bearing ring 92 and the front housing 2. The annular air supply chamber 124, 125 is formed between the bearing ring 92 and the front housing 2 and connected to the air feed pump 49 (Fig. 4) via the air inlet 126, 127. The plurality of air outflow bores 95, connected to the air supply chamber 124, 125 is formed in the circumferential inner wall of the bearing ring 92, and the rotary shaft 8 is supported by the air injected from the air outflow bores 95 under a non-contacting state.

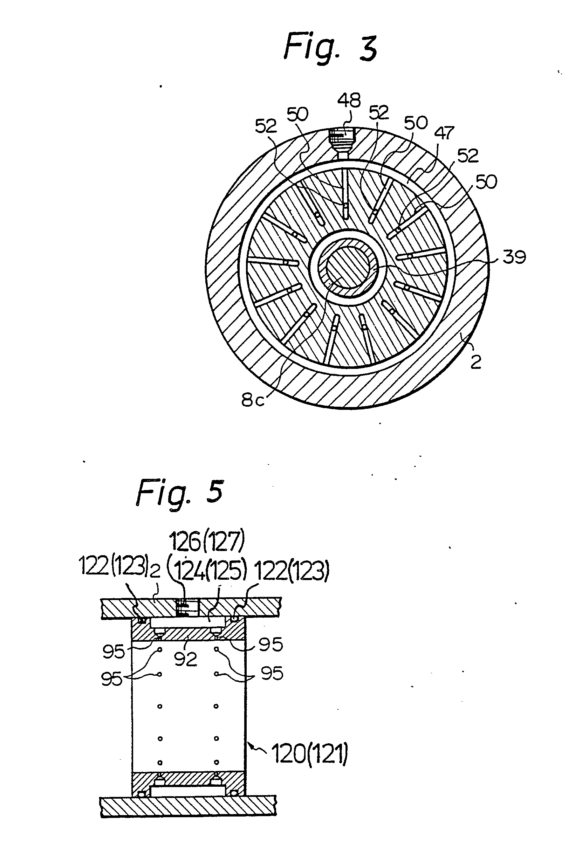

A pair of disc-shaped runners 39, 40 is inserted into the shaft portion 8c of the rotary shaft 8 and fixed onto the shaft portion 8c via a spacer 41 and a turbine wheel 42 by means of a nut 43. A stationary annular plate 44 is arranged between the runners 39 and 40, and runners 39, 40 and the annular plate 44 construct a non-contact type thrust air bearing. As illustrated in Fig. 1, each of the runners 39, 40 is spaced from the annular plate 44 by a slight distance. The annular plate 44 is fixed onto the front housing 2 via a pair of O rings 45, 46. As illustrated in Figs. 1 and 3, an annular groove 47, extending along the outer circumferential wall of the annular plate 44, is formed on the inner wall of the front housing 2 and connected to an air feed pump 49 via a compressed air supply hole 48 which is formed in the front housing 2. A plurality of air passages 50, each extending radially inwardly from the annular groove 47, is formed in the annular plate 44. In addition, a plurality of air outflow bores 51, each extending towards the runner 40 from the inner end portion of the corresponding air passage 50, is formed in the annular plate 44, and a plurality of air outflow bores 52, each extending towards the runner 39 from the inner end portion of the corresponding air passage 50, is formed in the annular plate 44.

As illustrated in Fig. 1, a turbine nozzle holder 53 is fixed onto the front housing 2 at a position adjacent to the annular plate 44, and an annular air supply chamber 54 is formed between the turbine nozzle holder 53 amd the front housing 2. The air supply chamber 54 is connected to a compressor 56 via a compressed air supply hole 55. The air supply chamber 54 comprises a compressed air injecting nozzle 57 having a plurality of guide vanes (not shown), and turbine blades 58 of the turbine wheel 42 are arranged to face the compressed air injecting nozzle 57. A housing interior chamber 59, in which the turbine wheel 42 is arranged, is connected to the atmosphere via a discharge hole 60 which is formed in the rear housing 3. The compressed air fed into the air supply chamber 54 from the compressor 56 is injected into the housing interior chamber 59 via the compressed air injecting nozzle 57. At this time, the compressed air injected from the injecting nozzle 57 provides the rotational force for the turbine wheel 42 and, thus, the rotary shaft 8 is rotated at a high speed. Then, the compressed air injected from the injecting nozzle 57 is discharged to the atmosphere via the discharge hole 60.

A through-hole 62 is formed on an end wall 61 of the rear housing 3, which defines the housing interior chamber 59, and an electrode holder 63 extending through the through-hole 62 is fixed onto the end wall by means of bolts 64. A cylindrical hole 65 is formed coaxially with the rotation axis of the rotary shaft 8 in the electrode holder 63, and a cylindrical electrode 66, made of wear resisting materials such as carbon, is inserted into the cylindrical hole 65 so as to be movable therein. In addition, a compression spring 67 is inserted between the electrode 66 and the electrode holder 63 so that the tip face 68 of the electrode 66 is urged onto the end face of the shaft portion 8c of the rotary shaft 8 due to the spring force of the compression spring 67. An external terminal 69 is fixed onto the outer wall of the rear housing 3 by means of bolts 70 and connected to a high voltage generator 71 used for generating a negative high voltage ranging from —60 kV to —90 kV. Consequently, the negative high voltage is applied to both the front housing 2 and the rear housing 3, and it is also applied to the spray head 9 via the electrode 66 and the rotary shaft 8.

In operation, paint is injected from the nozzle 21 of the paint injector 18 onto the circumferential inner wall of the outer cylindrical portion 14 of the spray head supporting member 12. Then the paint, injected onto the circumferential inner wall of the outer cylindrical portion 14, flows out onto the inner wall 15 of the spray head body 13 via the paint outflow bores 16 due to the centrifugal force caused by the rotation of the spray head 9. After this, the paint spreads on the inner wall 15 of the spray head body 13 and flows on the inner wall 15 in the form of a thin film. Then, the paint reaches the tip 13a of the spray head body 13. As mentioned previously, a negative high voltage is applied to the spray head 9.

Consequently, when the paint is sprayed from the tip 13a of the spray head body 13 in the form of fine particles, the particles of the sprayed paint are charged with electrons. Since the surface to be painted is normally grounded, the paint particles charged with electrons are attracted towards the surface to be painted due to electrical force and, thus, the surface to be painted is painted.

As illustrated in Fig. 1, the shaft portion 8b of the rotary shaft 8 passes through a circular hole formed in the center of the end plate 17 and projects outwards from the end plate 17. The cylindrical inner circumferential wall of the circular hole is arranged near the outer circumferential wall of the shaft portion 8b as closely as possible without contacting the shaft portion 8b. Air, injected from the air outflow bores 95 of air bearing 120 flows out into the exterior of the front housing 2 via the annular air outlet 130 between the inner circumferential wall of the hole and the outer circumferential wall of the shaft portion 8b and, as a result, it is possible to prevent paint or thinner from entering into the interior of the front housing 2.

On the other hand, in the above-mentioned thrust air bearing, compressed air is fed into the air passages 50 from the air feed pumps 49 via the annular groove 47. Then, the compressed air is injected from the air outflows bores 51 into the clearance between the annular plate 44 and the runner 40, and also, injected from the air outflow bores 52 into the clearance between the annular plate 44 and the runner 39. As a result of this, the pressure, which is necessary to maintain the above-mentioned clearances formed on each side of the annular plate 4, is generated between the annular plate 44 and the runners 39, 40. Consequently, the rotary shaft 8 is supported by the thrust air bearing and a pair of the radial air bearings under a non-contacting state via thin air layer. As is known to those skilled in the art, the coefficient of viscosity of air is about one thousandth of that of the viscosity of lubricating oil. Consequently, the frictional loss in the air bearing, which uses air as a lubricant, is extremely small. Therefore, since the amount of heat caused by the occurrence of the frictional loss is extremely small, it is possible to rotate the rotary shaft 8 at a high speed of about 80,000 r.p.m.

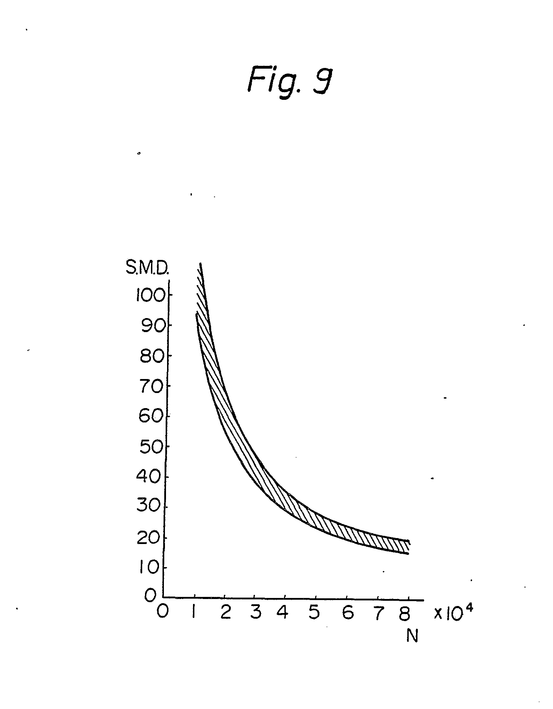

Fig. 9 illustrates the relationship between the size of the particles of sprayed paint and the rotating speed of the spray head in the case wherein the spray head 9 (Fig. 1) having a diameter of 75 mm is used. In Fig. 9, the ordinate S.M.D. indicates the mean diameter ($\mu$m) of paint particles, which is indicated in the form of a Sauter mean diameter, and the abscissa N indicates the number of revolutions per minute (r.p.m.) of the spray head 9. In a conventional rotary type electrostatic spray painting device, the maximum number of revolutions per minute N of the spray head is, for example, about 20,000 r.p.m. Consequently, from Fig. 9, it will be understood that, if the spray head having a diameter of 75 mm is used in a conventional rotary type electrostatic spray painting device, the minimum mean diameter S.M.D. of paint particles is in the range of 55 $\mu$m to 65 $\mu$m.

If the maximum number of revolutions per minute N is about 80,000 r.p.m., the paint can be divided into fine particles to such a degree that the mean diameter S.M.D. of paint particles is in the range of 15 μm to 20 μm.

Fig. 4 illustrates another embodiment according to the present invention. In Fig. 4, similar components are indicated with the same reference numerals used in Fig. 1. In the embodiment illustrated in Fig. 4, a pair or porous type radial air bearings 72, 73 and porous type thrust air bearing 74 are used for supporting the rotary shaft 8. Both radial air bearings 72, 73 have the same construction and, therefore, the construction of only the radial air bearing 72 will be hereinafter described. The porous type radial air bearing 72 comprises a bearing ring 75 made of porous material and arranged to face the circumferential outer wall of the hollow cylindrical portion 8a of the rotary shaft 8, a pair of support rings 76, 77 for supporting the porous bearing ring 75, a ring-shaped spacer 78 inserted between the support rings 76, 77, and an annular air supply chamber 79 formed between the porous bearing ring 75 and the spacer 78. The support rings 76, 77 are fitted into the front housing 2 via O rings 80, 81, respectively, which seal between the corresponding support rings 76, 77 and the front housing 2. In addition, a ring-shaped spacer 82 is inserted between the porous type radial air bearings 72, 73 and an air discharge hole 84 is formed in the ring-shaped spacer 82 so that it is aligned with an air discharge hole 83 formed in the front housing 2. The air supply chamber 79 is connected to the air feed pump 49 via air feed holes 85, 86. In operation, compressed air is fed into the air supply chamber 79 from the air feed pump 49 and then injected onto the circumferential outer wall of the hollow cylindrical portion 8a via the porous bearing ring 75. As a result of this, the rotary shaft 8 is supported by the air injected from the porous bearing ring 75 under a non-contacting state.

The porous type thrust air bearing 74 comprises annular plates 87, 88 made of porous material and fixed onto the corresponding side walls of the stationary annular plate 44 so as to cover the corresponding air outflow bores 52, 51. In operation, the compressed air is fed into the air passages 50 from the air feed pump 49 and then injected onto the side walls of the runners 39, 40 via the porous annular plates 87, 88. As a result of this, the runners 39, 40 are supported by the air injected from the porous annular plates 87, 88 under a non-contacting state.

Figs. 6 through 8 illustrate a still further embodiment of a thrust air bearing. In this embodiment, a plurality of spiral grooves 101 is formed on each side wall of the annular plate 100 which is arranged between the runners 39, 40. As illustrated in Fig. 7, each of the spiral grooves 101 is so formed that it gradually approaches the central portion of the annular plate 100 as each of the spiral grooves 101 extends towards the rotational direction B of the rotary shaft 8. Consequently, the annular plate 100 and the runners 39, 40 construct a spirally grooved thrust air bearing. When the runners 39, 40 rotate, ambient air is sucked between the annular plate 100 and the runners 39, 40 via the spiral grooves 101 and, as a result, the runners 39, 40 are supported in a non-contacting state by the air thus sucked with respect to the annular plate.

## Claims

1. A rotary type electrostatic spray painting device, comprising:

a metallic housing (1, 3) with a driven metallic rotary shaft (8) rotatably arranged therein and having a rear end and a front end projecting through a cover plate (17) of the housing and carrying a cup-shaped metallic spray head (9) fixed thereto, and

feeding means (21) for feeding a paint onto a cup-shaped inner wall (15) of the spray head, wherein

the rotary shaft is guided within the housing by axially and radially supported bearing means, whereby a bearing chamber (113) supplied with compressed air is defined as surrounding the rotary shaft, the bearing chamber being in communication with an annular outlet (130) formed on the cover plate around the shaft, and wherein an annular space (11) is formed in the rear face of the spray head, characterized in that

the bearing means are designed as aerostatic radial bearing means (120, 121,; 72, 73) and non-contact type thrust bearing means (39, 40, 44; 39, 40, 100; 74), wherein the compressed air is fed to the bearing chamber (113) through the radial bearing means, and in that

a free space is provided adjacent said rotary shaft (8) between said cover plate (17) and said spray head (9), said annular space (11) of said spray head (9) and said annular air outlet (130) being open to said free space.

2. A rotary type electrostatic spray painting device as claimed in claim 1, wherein each of said radial aerostatic bearings (120, 121; 72, 73) has an air supply chamber (124, 125; 85) connected to an air feed pump (49) for feeding the compressed air into a clearance formed between said radial air bearing and said rotary shaft (8).

3. A rotary type electrostatic spray painting device as claimed in claim 1 or 2, wherein each of said radial air bearing (120, 121) comprises a bearing ring (92) facing a circumferential outer wall of said rotary shaft (8) and forming thereon a plurality of air outflow bores (95).

4. A rotary type electrostatic spray painting device as claimed in claim 1 or 2, wherein each of said radial air bearings (72, 73) comprises a bearing ring (75) facing a circumferential outer wall of said rotary shaft (8) and made of porous material.

5. A rotary type electrostatic spray painting device as claimed in one of the claims 1 to 4, wherein said thrust air bearing (39, 40, 100) comprises a stationary annular plate (100) having opposed side walls, and a pair of runners (39, 40) being spaced from the corresponding side wall of said annular plate (100), a plurality of spiral grooves (101) being formed on the opposed side walls of the said annular plate.

6. A rotary type electrostatic spray painting device as claimed in one of the claims 1 to 4, wherein said non-contact type thrust bearing means (39, 40, 44) further comprises an air feed pump (49) for producing compressed air, said thrust air-bearing comprises a stationary annular plate (44) having opposed side walls, and a pair of runners (39, 40) fixed onto said rotary shaft (8) and arranged on each side of said annular plate, each of said runners being spaced from the corresponding side wall of said annular plate, a plurality of air outflow bores (51, 52) connected to said air feed pump (49) being formed on the opposed side walls of the annular plate (44).

7. A rotary type electrostatic spray painting device as claimed in claim 6, wherein said annular plate (44) forms therein a plurality of radially extending air passages (50), each connecting said corresponding air outflow bore (51, 52) to said air feed pump (49).

8. A rotary type electrostatic spray painting device as claimed in claim 6 or 7, wherein the air outflow bores (51, 52) supplied by the radial extending air passages (50) open on both side surfaces of the annular plate (44) into broadened circular recesses, covered by ring-shaped bearing bodies (87, 88) made of porous material.

9. A rotary type electrostatic spray painting device as claimed in one of the claims 1 to 8, further comprising a generator (71) generating a negative high voltage and having an output connected to said housing (2, 3) and electrode means arranged in said housing and electrically connecting said output to said spray head (9), wherein said electrode means comprises an electrode (66) which is arranged to continuously contact with the rear end (8c) of said rotary shaft (8).

10. A rotary type electrostatic spray painting device as claimed in claim 9, wherein said electrode (66) is made of carbon.

11. A rotary type electrostatic spray painting device as claimed in claim 9 or 10, wherein the rear end (8c) of said rotary shaft (8) has a flat end face extending perpendicular to the rotation axis of said rotary shaft, said electrode (66) being arranged coaxially with the rotation axis of said rotary shaft (8) and having a flat end face (68) which is in contact with the flat end face of the rear end of said rotary shaft.

12. A rotary type electrostatic spray painting device as claimed in one of the claims 9 to 11, wherein said electrode means further comprises an electrode holder (63) fixed onto said housing (3) and having therein a cylindrical hole (65), into which said electrode (66) is slidably inserted, and a compression spring (67) arranged in the cylindrical hole of said electrode holder between said electrode holder and said electrode (66).

13. A rotary type electrostatic spray painting device as claimed in one of the claims 1 to 12, wherein said means for driving said shaft (8) comprises a compressor (56), an air injection nozzle (57) arranged in said housing (2, 3) and connected to said compressor, and a turbine wheel (42) fixed onto said rotary shaft (8) and having a turbine blade (58) which is arranged to face said air injection nozzle (57).

14. A rotary type electrostatic spray painting device as claimed in one of the claims 1 to 13, wherein said cup-shaped spray head (9) comprises a cylindrical inner wall (14) arranged coaxially with the rotation axis of said rotary shaft (8) and defining therein said annular space (11), a plurality of paint outflow bores (16) being formed in the cylindrical inner wall (14) of said spray head and smoothly connected to the cup-shaped inner wall (15) of said head, said feed means (18) having a paint injection nozzle (21) which is arranged in said annular space (11).

**Patentansprüche**

1. Elektrostatisches Farbspritzgerät mit rotierendem Sprühorgan mit einem metallischen Gehäuse (1, 3), in dem eine angetriebene, metallische Drehwelle (8) drehbar angeordnet ist, die ein Hinterende sowie ein Vorderende aufweist, das durch eine Abdeckplatte (17) des Gehäuses vorsteht und einen an ihm befestigten becherförmigen, metallischen Spritzkopf (9) trägt, und einem Zuführelement (21) zum Zuführen von Farbe auf eine becherförmige Innenwand (15) des Spritzkopfes, wobei die Drehwelle innerhalb des Gehäuses durch axial und radial stützende Lagerelemente geführt ist, wobei eine mit Druckluft versorgte Lagerkammer (113) derart gebildet ist, daß sie die Drehwelle umgibt, und die Lagerkammer in Verbindung mit einem auf der Abdeckplatte um die Drehwelle ausgebildeten, ringförmigen Luftauslaß (130) steht, und wobei auf der Rückseite des Spritzkopfes ein Ringraum (11) ausgebildet ist, dadurch gekennzeichnet, daß die Lagerelement als aerostatische Radiallagerelemente (120, 121; 72, 73) und als berührungsfreie Längsdrucklagerelemente (39, 40, 44; 39, 40, 100; 74) ausgebildet sind, wobei die Druckluft durch die Radiallagerelemente der Lagerkammer (113) zugeführt wird, und daß neben der Drehwelle (8) zwischen der Abdeckplatte (17) und dem Spritzkopf (9) ein Freiraum vorgesehen ist, wobei der Ringraum (11) des Spritzkopfes (9) und der ringförmige Luftauslaß (130) zu dem Freiraum geöffnet sind.

2. Elektrostatisches Farbspritzgerät mit rotierendem Sprühorgan nach Anspruch 1, bei dem jedes aerostatische Radiallager (120, 121; 72, 73) eine an eine Luftzufuhrpumpe (49) angeschlossene Luftversorgungskammer (124, 125; 85) zur Zufuhr der Druckluft in einen zwischen dem Radialluftlager und der Drehwelle (8) ausgebildeten Zwischenraum aufweist.

3. Elektrostatisches Farbspritzgerät mit rotierendem Sprühorgan nach Anspruch 1 oder 2, bei dem jedes Radialluftlager (120, 121) einen Lagerring (92) aufweist, der einer Außenmantelwand der Drehwelle (8) gegenüberliegt und in dem eine Vielzahl Luftausströmöffnungen (95) ausgebildet ist.

4. Elektrostatisches Farbspritzgerät mit rotierendem Sprühorgan nach Anspruch 1 oder 2, bei dem jedes Radialluftlager (72, 73) einen Lagerring (75) aufweist, der einer Mantelaußenwand der Drehwelle (8) gegenüberliegt und aus einem porösen Werkstoff hergestellt ist.

5. Elektrostatisches Farbspritzgerät mit rotierendem Sprühorgan nach einem der Ansprüche 1 bis 4, bei dem das Längsdrucklager (39, 40, 100) eine ortsfeste Ringplatte (100) mit entgegengesetzten Seitenwänden und ein Paar Läufer (39, 40) aufweist, die einen Abstand zu der jeweils zugeordneten Seitenwand der Ringplatte (100) aufweisen, wobei eine Vielzahl Spiralnuten (101) auf den entgegengesetzten Seitenwänden der Ringplatte ausgebildet ist.

6. Elektrostatisches Farbspritzgerät mit rotierendem Sprühorgan nach einem der Ansprüche 1 bis 4, bei dem das berührungsfreie Längsdrucklager (39, 40, 44) weiterhin eine Luftzufuhrpupme (49) zur Erzeugung von Druckluft aufweist, wobei das Luft-Längsdrucklager eine ortsfeste Ringplatte (44) mit entgegengesetzten Seitenwänden und ein Paar Läufer (39, 40) aufweist, die auf der Drehwelle (8) befestigt und beidseitig der Ringplatte angeordnet sind, wobei jeder Läufer im Abstand zu der ihm zugeordneten Seitenwand der Ringplatte angeordnet ist und wobei eine Vielzahl an die Luftzufuhrpumpe (49) angeschlossener Luftausströmöffnungen (51, 52) auf den entgegengesetzten Seitenwänden der Ringplatte (44) ausgebildet ist.

7. Elektrostatisches farbspritzgerät mit rotierendem Sprühorgan nach Anspruch 6, bei dem die Ringplatte (44) mit einer Vielzahl sich radial erstreckender Luftkanäle (50) ausgebildet ist, die jeweils einander zugeordnete Luftausströmöffnungen (51, 52) an die Luftzufuhrpumpe (49) anschließen.

8. Elektrostatisches Farbspritzgerät mit rotierendem Sprühorgan nach Anspruch 6 oder 7, bei dem die durch die sich radial erstreckenden Luftkanäle (50) versorgten Luftausströmöffnungen (51, 52) zu beiden Seitenflächen der Ringplatte (44) in erweiterte, kreisförmige Ausnehmungen öffnen, die durch ringförmige Lagerkörper (87, 88) abgedeckt sind, die aus einem porösen Werkstoff hergestellt sind.

9. Elektrostatisches Farbspritzgerät mit rotierendem Sprühorgan nach einem der Ansprüche 1 bis 8, das weiterhin einen Generator (71) zur Erzeugung einer negativen Hochspannung, der einen an des Gehäuse (2, 3) angeschlossenen Ausgang aufweist, und eine Elekrodeneinrichtung aufweist, die in dem Gehäuse angeordnet ist und den Ausgang elektrisch an den Spritzkopf (9) anschließt, wobei die Elektrodeneinrichtung eine Elektrode (66) aufweist, die derart angeordnet ist, daß sie ständig in Kontakt mit dem Hinterende (8c) der Drehwelle (8) steht.

10. Elektrostatisches Farbspritzgerät mit rotierendem Sprühorgan nach Anspruch 9, bei dem die Elektrode (66) aus Kohlenstoff hergestellt ist.

11. Elektrostatisches Farbspritzgerät mit rotierendem Sprühorgan nach einem der Ansprüche 9 oder 10, bei dem das Hinterende (8c) der Drehwelle (8) eine ebene Stirnfläche aufweist, die sich rechtwinklig zur Drehachse der Drehwelle erstreckt, wobei die Elektrode (66) koaxial zur Drehachse der Drehwelle (8) angeordnet ist und eine ebene Stirnfläche (68) aufweist, die in Anlage mit der ebenen Stirnfläche des Hinterendes der Drehwelle ist.

12. Elektrostatisches Farbspritzgerät mit rotierendem Sprühorgan nach einem der Ansprüche 9 bis 11, bei dem die Elektrodeneinrichtung weiterhin eine Elektrodenhalterung (63), die auf dem Gehäuse (3) befestigt ist und mit einer zylindrischen Bohrung (65) ausgestaltet ist, in die die Elektrode (66) verschiebbar eingesetzt ist, und eine Druckfeder (67) aufweist, die in der zylindrischen Bohrung der Elektrodenhalterung zwischen der Elektrodenhalterung und der Elektrode (66) angeordnet ist.

13. Elektrostatisches Farbspritzgerät mit rotierendem Sprühorgan nach einem der Ansprüche 11 bis 12, bei dem die Einrichtung zum Antrieb der Drehwelle (8) einen Kompressor (56), eine Lufteinspritzdüse (57), die in dem Gehäuse (2, 3) angeordnet und an den Kompressor angeschlossen ist, und ein Lüfterlaufrad (42) aufweist das auf der Drehwelle (8) befestigt ist und eine Laufradschaufel (58) aufweist, die derart angeordnet ist, daß sie der Lufteinspritzdüse (57) gegenüberliegt.

14. Elektrostatisches Farbspritzgerät mit rotierendem Sprühorgan nach einem der Ansprüche 1 bis 13, bei dem der becherförmige Spritzkopf (9) eine zylindrische Innenwand (14), die koaxial zur Drehachse der Drehwelle (8) angeordnet ist und in sich den Ringraum (11) ausbildet, und eine Vielzahl Farbausströmöffnungen (16) aufweist, die in der zylindrischen Innenwand (14) des Spritzkopfes ausgebildet und stetig an die becherförmige Innenwand (15) des Spritzkopfes angeschlossen sind, wobei die Zufuhreinrichtung (18) eine Farbeinspritzdüse (21) aufweist, die in dem Ringraum (11) angeordnet ist.

**Revendications**

1. Un dispositif de peinture par pulvérisation électrostatique, du type tournant et comprenant:
— un carter métallique (1, 3) dans lequel est monté à rotation un arbre tournant métallique entraîné (8) et comportant une extrémité arrière et une extrémité avant dépassant au-travers d'une plaque de recouvrement (17) du carter et portant une tête métallique de pulvérisation en forme de cuvette (9) qui est fixée sur celui-ci, et
— un moyen de distribution (21) pour distribuer une peinture sur une paroi intérieure en forme de cuvette (15) de la tête de pulvérisation,
dans lequel l'arbre tournant est guidé à l'intérieur du carter par des moyens de paliers le supportant axialement et radialement, dans lequel une chambre de paliers (113) alimentée en air comprimé est définie de manière à entourer l'arbre tournant, la chambre de paliers étant en communication avec un orifice annulaire de sortie d'air (130) ménagé dans la plaque de recouvrement autour de l'arbre, et dans lequel un espace annulaire (11) est formé dans la face arrière de la tête de pulvérisation, caractérisé en ce que les moyens de paliers sont agencés sous forme de moyens de paliers aérostatiques radiaux (120, 121; 72, 73) et de moyens de paliers de butée du type sans contact (39, 40, 44; 39, 40, 100; 74), l'air comprimé étant introduit dans la chambre de paliers (113) par l'intermédiaire de moyens de paliers radiaux, et en ce qu'un espace libre est prévu dans une zone adjacente audit arbre tournant (8) entre ladite plaque de recouvrement (17) et ladite tête de pulvérisation (9), ledit espace annulaire (11) de ladite tête de pulvérisation (9) et ledit orifice annulaire de sortie d'air (130) étant ouverts en direction dudit espace libre.

2. Un dispositif de peinture par pulvérisation électrostatique du type tournant tel que revendiqué dans la revendication 1, dans lequel chacun desdits paliers aérostatiques radiaux (120, 121; 72, 73) comporte une chambre d'alimentation en air (124, 125; 85) reliée à une pompe de distribution d'air (49) pour introduire l'air comprimé dans un intervalle formé entre ledit palier pneumatique radial et ledit arbre tournant (8).

3. Un dispositif de peinture par pulvérisation électrostatique du type tournant tel que revendiqué dans la revendication 1 ou 2, dans lequel chacun desdits paliers pneumatiques radiaux (120, 121) comprend un anneau de palier (92) faisant face à une paroi extérieure circonférentielle dudit arbre tournant (8) et formant dans cette zone une pluralité d'orifices de sortie d'air (95).

4. Un dispositif de peinture par pulvérisation électrostatique du type tournant tel que revendiqué dans la revendication 1 ou 2, dans lequel chacun desdits paliers pneumatiques radiaux (72, 73) comprend un anneau de palier (75) face à une paroi extérieure circonférentielle dudit arbre tournant (8) et constituée en matériau poreux.

5. Un dispositif de peinture par pulvérisation électrostatique, du type tournant tel que revendiqué dans une des revendications 1 à 4, dans lequel ledit palier pneumatique de butée (39, 40, 100) comprend une plaque annulaire stationnaire (100) comportant des parois latérales opposées et deux flasques (39, 40) espacés de la paroi latérale correspondante de ladite plaque annulaire (100), une pluralité de rainures spirales (101) étant ménagées dans les parois latérales opposées de ladite plaque annulaire.

6. Un dispositif de peinture par pulvérisation électrostatique, du type tournant tel que revendiqué dans une des revendications 1 à 4, dans lequel lesdits moyens de paliers de butée du type sans contact (39, 40, 44) comprennent en outre une pompe de distribution d'air (49) pour produire de l'air comprimé, ledit palier pneumatique de butée comprend une plaque annulaire stationnaire (44) comportant des parois latérales opposées, et une paire de flasques (39, 40) fixés sur ledit arbre tournant (8) et disposés de chaque côté de ladite plaque annulaire, chacun desdits flasques étant espacés de la paroi latérale correspondante de ladite plaque annulaire, plusieurs orifices de sortie d'air (51, 52) qui sont reliés à ladite pompe de distribution d'air (49) étant formés dans les parois latérales opposées de ladite plaque annulaire (44).

7. Un dispositif de peinture par pulvérisation électrostatique, du type tournant tel que revendiqué dans la revendication 6, dans lequel ladite plaque annulaire (44) forme une pluralité de passages d'air (50) s'étendant radialement, chacun assurant la liaison dudit alésage de sortie d'air correspondant (51, 52) avec ladite pompe de distribution d'air (49).

8. Un dispositif de peinture par pulvérisation électrostatique, du type tournant tel que revendiqué dans la revendication 6 ou 7, dans lequel les alésages de sortie d'air (51, 52) alimentés par les passages d'air s'étendant radialement (50) débouchent sur les deux surfaces latérales de la plaque annulaire (44) dans des évidements circulaires élargis, recouverts par des corps de paliers de forme annulaire (87, 88) formés en matériau poreux.

9. Un dispositif de peinture par pulvérisation électrostatique, du type tournant tel que revendiqué dans une des revendications 1 à 8, comprenant en outre un générateur (71) produisant une haute tension négative et comportant une sortie reliée audit carter (2, 3) et un moyen d'électrode disposé dans ledit carter et reliant électriquement ladite sortie à ladite tête de pulvérisation (9), ledit moyen d'électrode comprenant une électrode (66) qui est disposée de façon à être continuellement en contact avec l'extrémité arrière (8c) dudit arbre tournant (8).

10. Un dispositif de peinture par pulvérisation électrostatique, du type tournant tel que revendiqué dans la revendication 9, dans lequel ladite électrode (66) est formée de carbone.

11. Un dispositif de peinture par pulvérisation électrostatique de type tournant tel que revendiqué dans la revendication 9 ou 10, dans lequel l'extrémité arrière (8c) dudit arbre tournant (8) comporte une face d'extrémité plane s'étendant perpendiculairement à l'axe de rotation arbre tournant, ladite électrode (66) étant disposée coaxialement par rapport à l'axe de rotation dudit arbre tournant (8) et comportant une face d'extrémité plane (68) qui est contact avec la face d'extrémite plane de l'extrémité arrière dudit arbre tournant.

12. Un dispositif de peinture par pulvérisation électrostatique, du type tournant tel que revendiqué dans une des revendications 9 à 11, dans lequel ledit moyen d'électrode comprend en outre un porte-électrode (63) fixé sur ledit carter (3) et comportant un trou cylindrique (65) dans lequel ladite électrode (66) est inserée de façon coulissante, et un ressort de compression (67) disposé dans le trou cylindrique dudit porte-électrode entre ledit porte-électrode et ladite électrode (66).

13. Un dispositif de peinture par pulvérisation électrostatique, du type tournant tel que revendiqué dans une des revendications 1 à 12, dans lequel ledit moyen d'entraînement dudit arbre (8) comprend un compresseur (56), une buse d'injection d'air (57) disposée dans ledit carter (2, 3) et reliée audit compresseur, et une roue de turbine (42) fixée sur ledit arbre tournant (8) et comportant un aubage de turbine (58) qui est disposé de façon à faire face à ladite buse d'injection d'air (57).

14. Un dispositif de peinture par pulvérisation électrostatique, du type tournant tel que revendiqué dans une des revendications 1 à 13, dans lequel ladite tête de pulvérisation (9) en forme de cuvette comprend une paroi intérieure cylindrique (14) disposée coaxialement par rapport à l'axe de rotation dudit arbre tournant (8) et définissant ledit espace annulaire (11), une pluralité d'alésages de sortie de peinture (16) qui sont ménagés dans la paroi intérieure cylindrique (14) de ladite tête de pulvérisation et qui sont reliés graduellement à la paroi intérieure (15) en forme de cuvette de ladite tête de pulvérisation, ledit moyen d'alimentation (18) comportant une buse d'injection de peinture (21) qui est placée dans ledit espace annulaire (11).

Fig. I

0 034 246

# Fig. 2

# Fig. 3

# Fig. 5

Fig. 4

*Fig. 6*

*Fig. 7*

*Fig. 8*

# Fig. 9